(19) Europäisches Patentamt / European Patent Office / Office européen des brevets

(11) **EP 4 550 467 A1**

(12) **EUROPEAN PATENT APPLICATION**
published in accordance with Art. 153(4) EPC

(43) Date of publication:
07.05.2025 Bulletin 2025/19

(21) Application number: 23831160.9

(22) Date of filing: 16.06.2023

(51) International Patent Classification (IPC):
$H01M\ 4/525^{(2010.01)}$    $C01G\ 53/00^{(2025.01)}$
$H01M\ 4/36^{(2006.01)}$    $H01M\ 4/505^{(2010.01)}$

(52) Cooperative Patent Classification (CPC):
C01G 53/00; H01M 4/36; H01M 4/505; H01M 4/525;
Y02E 60/10

(86) International application number:
PCT/JP2023/022414

(87) International publication number:
WO 2024/004714 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 JP 2022104966

(71) Applicant: Panasonic Intellectual Property
Management Co., Ltd.
Kadoma-shi, Osaka 571-0057 (JP)

(72) Inventors:
• AOKI, Yoshinori
  Kadoma-shi, Osaka 571-0057 (JP)
• TAKAYAMA, Tomoo
  Kadoma-shi, Osaka 571-0057 (JP)
• FUJITANI, Naoya
  Kadoma-shi, Osaka 571-0057 (JP)
• OGASAWARA, Takeshi
  Kadoma-shi, Osaka 571-0057 (JP)
• JITO, Daizo
  Kadoma-shi, Osaka 571-0057 (JP)

(74) Representative: Novagraaf International SA
Chemin de l'Echo 3
1213 Onex, Geneva (CH)

(54) **POSITIVE ELECTRODE ACTIVE MATERIAL FOR NONAQUEOUS ELECTROLYTE SECONDARY BATTERIES, METHOD FOR PRODUCING POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57) The present invention provides a positive electrode active material which contributes to the improvement of safety of a secondary battery. This positive electrode active material, which is contained in a nonaqueous electrolyte secondary battery, contains a lithium transition metal composite oxide; the lithium transition metal composite oxide contains Ni, Mn, **P,** Me (Me is composed of at least one element that is selected from the group consisting of B, Al, Si, Ti, Fe, Co, Sr, Zr, Nb, Mo, Sn, W and Bi), and at least one of Ca and Sr, respectively at specific content ratios; and the ratio m/n of the half-value width m of the diffraction peak of the (003) plane to the half-value width n of the diffraction peak of the (110) plane in an X-ray diffraction pattern obtained by X-ray diffractometry satisfies 0.75 ≤ m/n.

EP 4 550 467 A1

# Figure 1

**Description**

TECHNICAL FIELD

The present disclosure relates to a positive electrode active material for a non-aqueous electrolyte secondary battery, a method for manufacturing a positive electrode active material for a non-aqueous electrolyte secondary battery, and a non-aqueous electrolyte secondary battery.

BACKGROUND ART

Lithium nickelate ($LiNiO_2$) has been conventionally known to have a high energy density, and substitution of a part of Ni with Co, Al, Mn, or the like can improve battery characteristics such as reliability.

Patent Literature 1 discloses a positive electrode active material having an oxide coating layer including $Li_3PO_4$ formed on a surface of a lithium-transition metal composite oxide containing Ni, Mn, Co, and Sr. Patent Literature 1 describes that use of this positive electrode active material improves charge-discharge cycle characteristics of a secondary battery.

CITATION LIST

PATENT LITERATURE

PATENT LITERATURE 1: Japanese Patent No. 6749973

SUMMARY

A lithium-transition metal composite oxide with a content rate of Ni of greater than or equal to 75% tends to undergo side reactions with a non-aqueous electrolyte. In addition, since a large amount of Li is abstracted during charge, the layered crystal structure easily breaks. If temperature in the battery rises due to overcharge, short circuit, or the like, the rise in temperature proceeds further chemical reactions with heat generation (self-exothermic reactions) in the battery, which may deteriorate safety of the battery. The art described in Patent Literature 1 does not investigate improvement of the safety of the battery, and still has room for improvement.

It is an advantage of the present disclosure to provide a positive electrode active material that contributes to improvement of the safety of the non-aqueous electrolyte secondary battery.

A positive electrode active material for a non-aqueous electrolyte secondary battery of an aspect of the present disclosure includes a lithium-transition metal composite oxide, wherein the lithium-transition metal composite oxide contains Ni, Mn, P, Me, wherein Me represents at least one element selected from the group consisting of B, Al, Si, Ti, Fe, Co, Sr, Zr, Nb, Mo, Sn, W, and Bi, and at least one of the group consisting of Ca and Sr, a Ni content rate of the lithium-transition metal composite oxide satisfies 75 mol% ≤ the Ni content rate < 95 mol% relative to a total number of moles of metal elements excluding Li, a Mn content rate of the lithium-transition metal composite oxide satisfies 0 mol% < the Mn content rate ≤ 20 mol% relative to the total number of moles of metal elements **excluding** Li, a P content rate of the lithium-transition metal composite oxide satisfies 0 mol% < the P content rate ≤ 2 mol% relative to the total number of moles of metal elements excluding Li, an Me content rate of the lithium-transition metal composite oxide satisfies 0 mol% < the Me content rate ≤ 20 mol% relative to the total number of moles of metal elements excluding Li, a sum of a Ca content rate and a Sr content rate of the lithium-transition metal composite oxide satisfies 0 mol% < the Ca content rate + the Sr content rate ≤ 2 mol% relative to the total number of moles of metal elements excluding Li, a ratio of a Co content rate to the Mn content rate satisfies 0 ≤ the Co content rate / the Mn content rate < 2, and a ratio m/n of a half-value width "m" of a diffraction peak of a (003) face to a half-value width "n" of a diffraction peak of a (110) face in an X-ray diffraction pattern by X-ray diffraction satisfies 0.75 ≤ m/n.

A method for manufacturing a positive electrode active material for a non-aqueous electrolyte secondary battery of an aspect of the present disclosure includes: a step of mixing a metal oxide containing at least Ni, a Li raw material, a P raw material, and at least one of the group consisting of a Ca raw material and a Sr raw material to obtain a mixture; and a step of calcining the mixture.

A non-aqueous electrolyte secondary battery of an aspect of the present disclosure comprises: a positive electrode including the above positive electrode active material for a non-aqueous electrolyte secondary battery; a negative electrode; and a non-aqueous electrolyte.

According to the positive electrode active material for a non-aqueous electrolyte secondary battery of an aspect of the present disclosure, the safety of the secondary battery is improved, specifically safety of the secondary battery at high temperature is improved. According to the method for manufacturing a positive electrode active material for a non-aqueous electrolyte secondary battery of an aspect of the present disclosure, this positive electrode active material for a non-aqueous electrolyte secondary battery can be produced.

BRIEF DESCRIPTION OF DRAWING

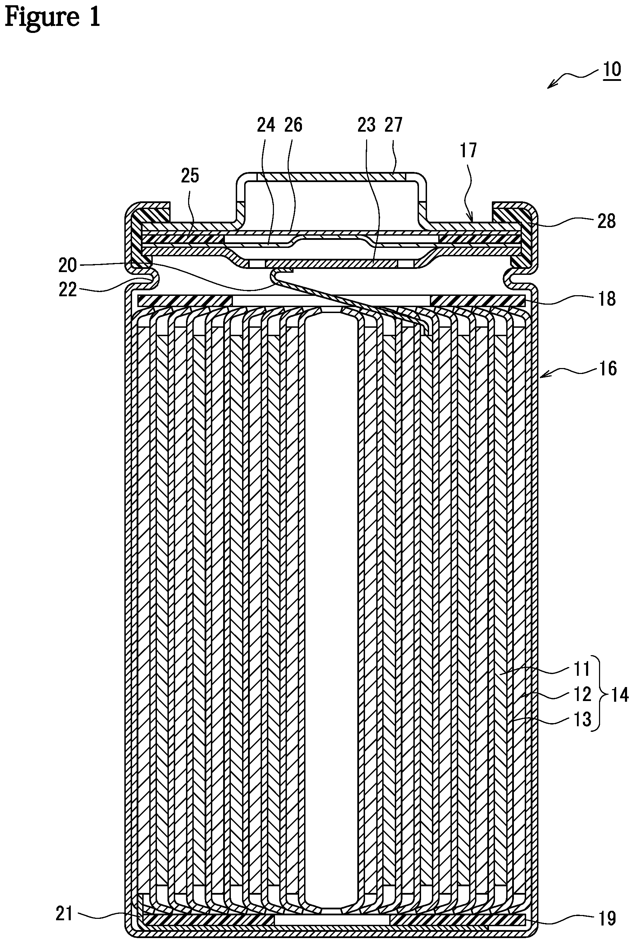

FIG. 1 is a vertical sectional view of a non-aqueous electrolyte secondary battery of an example of an embodiment.

DESCRIPTION OF EMBODIMENTS

A layered structure of a lithium-transition metal composite oxide includes a layer of transition metal such as Ni and a Li layer, and by the Li layer reversibly intercalating and deintercalating Li ions present therein, charge-discharge reactions of a battery proceed. It is commonly known that a lithium-transition metal composite oxide containing Ni as a main component is a positive electrode active material having a high capacity. However, a lithium-transition metal composite oxide with the Ni content rate of greater than or equal to 75 mol% easily causes side reactions with a non-aqueous electrolyte. In addition, since a large amount of Li is abstracted during charge, the layered crystal structure easily breaks. Thus, if temperature in the battery rises due to overcharge, short circuit, or the like, the rise in temperature proceeds further chemical reactions with heat generation (self-exothermic reactions) in the battery, which may cause operation of a safety vent of the battery described later.

Patent Literature 1 discloses, from the viewpoint of improvement of charge-discharge cycle characteristics, a positive electrode active material having an oxide-coating layer including $Li_3PO_4$ formed on a surface of a lithium-transition metal composite oxide containing Ni, Mn, Co, and Sr. However, Patent Literature 1 does not investigate the improvement of the safety of the battery.

The present inventors have made intensive investigation to solve the above problem, and consequently found that the safety of the battery is improved by including, in a positive electrode active material, a lithium-transition metal composite oxide containing each of Ni, Mn, P, Me, wherein Me represents at least one element selected from the group consisting of B, Al, Si, Ti, Fe, Co, Sr, Zr, Nb, Mo, Sn, W, and Bi, and at least one of the group consisting of Ca and Sr at a predetermined content rate, wherein a ratio m/n of a half-value width "m" of a diffraction peak of a (003) face to a half-value width "n" of a diffraction peak of a (110) face in an X-ray diffraction pattern by X-ray diffraction satisfies $0.75 \leq m/n$. With a synergistic effect of the at least one of the group consisting of Ca and Sr and P inhibits the side reactions with the non-aqueous electrolyte, and setting the ratio of the half-value widths to be within the prescribed range can stabilize the crystal structure. It is presumed that these synergistic effects can inhibit the self-exothermic reactions of the battery to improve the safety of the battery.

Hereinafter, an example of an embodiment of the non-aqueous electrolyte secondary battery according to the present disclosure will be described in detail. Hereinafter, a cylindrical battery in which a wound electrode assembly is housed in a cylindrical exterior will be exemplified, but the electrode assembly is not limited to the wound electrode assembly, and may be a stacked electrode assembly in which a plurality of positive electrodes and a plurality of negative electrodes are alternately stacked one by one via a separator. The exterior is not limited to the cylindrical exterior, and may be, for example, a rectangular exterior, a coin-shaped exterior, or a battery case composed of a laminated sheet including a metal layer and a resin layer.

FIG. 1 is an axial sectional view of a cylindrical secondary battery 10 of an example of an embodiment. As illustrated in FIG. 1, the secondary battery 10 comprises a wound electrode assembly 14, an electrolyte liquid, and an exterior 16 housing the electrode assembly 14 and the electrolyte. The electrode assembly 14 includes a positive electrode 11, a negative electrode 12, and a separator 13, and has a wound structure in which the positive electrode 11 and the negative electrode 12 are spirally wound via the separator 13. The exterior 16 is a bottomed cylindrical metallic container having an opening on one side in an axial direction, and the opening of the exterior 16 is capped with a sealing assembly 17. Hereinafter, for convenience of description, the sealing assembly 17 side of the battery will be described as the upper side, and the bottom side of the exterior 16 will be described as the lower side.

All of the positive electrode 11, the negative electrode 12, and the separator 13 that constitute the electrode assembly 14 have an elongated rectangular shape, and are spirally wound in a longitudinal direction to be alternately stacked in a radial direction of the electrode assembly 14. The separator 13 separates the positive electrode 11 and the negative electrode 12 each other. To prevent precipitation of lithium, the negative electrode 12 is formed to be one size larger than the positive electrode 11. That is, the negative electrode 12 is formed to be longer than the positive electrode 11 in the longitudinal direction and the short direction. The two separators 13 are formed to be one size larger than at least the positive electrode 11, and disposed to, for example, sandwich the positive electrode 11. The electrode assembly 14 comprises: a positive electrode lead 20 connected to the positive electrode 11 by welding or the like; and a negative electrode lead 21 connected to the negative electrode 12 by welding or the like. In the electrode assembly 14, the longitudinal direction of the positive electrode 11 and the negative electrode 12 becomes a winding direction, and the short direction of the positive electrode 11 and the negative electrode 12 becomes the axial direction. That is, an end surface in the short direction of the positive electrode 11 and the negative electrode 12 forms an end surface of the axial direction of the electrode assembly 14.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior 16 by welding or the like, and the exterior 16 becomes a negative electrode terminal.

A gasket 28 is provided between the exterior 16 and the sealing assembly 17 to achieve sealability inside the battery. On the exterior 16, a grooved portion 22 in which a part of a side wall thereof projects inward to support the sealing assembly 17 is formed. The grooved portion 22 is preferably formed in a circular shape along a circumferential direction of the exterior 16, and supports the sealing assembly 17 with the upper face thereof. The sealing assembly 17 is fixed on the upper part of the exterior 16 with the grooved portion 22 and with an end of the opening of the exterior 16 caulked to the sealing assembly 17.

The sealing assembly 17 has a structure having the internal terminal plate 23, a lower vent member 24, an insulating member 25, an upper vent member 26, and the cap 27, which are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts thereof. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the opening of the cap 27.

Hereinafter, the positive electrode 11, the negative electrode 12, the separator 13, and the non-aqueous electrolyte, which constitute the secondary battery 10, specifically the positive electrode 11, will be described in detail.

[Positive Electrode]

The positive electrode 11 has, for example, a positive electrode current collector and a positive electrode mixture layer formed on a surface of the positive electrode current collector. The positive electrode mixture layer is preferably formed on both surfaces of the positive electrode current collector. For the positive electrode current collector, a foil of a metal stable within a potential range of the positive electrode 11, such as aluminum and an aluminum alloy, a film in which such a metal is disposed on a surface layer thereof, and the like may be used. A thickness of the positive electrode current collector is, for example, greater than or equal to 10 $\mu$m and less than or equal to 30 $\mu$m.

The positive electrode mixture layer includes, for example, the positive electrode active material, a conductive agent, and a binder. A thickness of the positive electrode mixture layer is, for example, greater than or equal to 10 $\mu$m and less than or equal to 150 $\mu$m on one side of the positive electrode current collector. The positive electrode 11 may be produced by, for example, applying a positive electrode mixture slurry including the positive electrode active material, the conductive agent, and the like on the surface of the positive electrode current collector, and drying and subsequently rolling the coating film to form the positive electrode mixture layer on both surfaces of the positive electrode current collector.

Examples of the conductive agent included in the positive electrode mixture layer include carbon-based particles such as carbon black (CB), acetylene black (AB), Ketjenblack, carbon nanotube (CNT), graphene, and graphite. These may be used singly, or may be used in combination of two or more thereof.

Examples of the binder included in the positive electrode mixture layer include a fluororesin such as polytetrafluoroethylene (PTFE) and polyvinylidene fluoride (PVDF), a polyimide resin, an acrylic resin, a polyolefin resin, and polyacrylonitrile (PAN). These may be used singly, or may be used in combination of two or more thereof.

The positive electrode active material included in the positive electrode mixture layer includes a lithium-transition metal composite oxide. The lithium-transition metal composite oxide contains Ni, Mn, P, Me, wherein Me represents at least one element selected from the group consisting of B, Al, Si, Ti, Fe, Co, Sr, Zr, Nb, Mo, Sn, W, and Bi, and at least one of the group consisting of Ca and Sr.

A Ni content rate of the lithium-transition metal composite oxide satisfies 75 mol% ≤ the Ni content rate ≤ 95 mol% relative to a total number of moles of metal elements excluding Li. The Ni content rate is preferably within this range from the viewpoint of achievement of both the increase in capacity and stabilization of the structure. A lower limit of the Ni content rate is preferably 80 mol%, and more preferably 85 mol%.

A Mn content rate of the lithium-transition metal composite oxide satisfies 0 mol% < the Mn content rate ≤ 20 mol% relative to the total number of moles of metal elements excluding Li. The Mn content rate is preferably within this range from the viewpoint of achievement of both the increase in capacity and safety. A lower limit of the Mn content rate is, for example, 1 mol%.

A P content rate of the lithium-transition metal composite oxide satisfies 0 mol% < the P content rate ≤ 2 mol% relative to the total number of moles of metal elements excluding Li. P at this content rate present with Ca and Sr can improve safety of the lithium-transition metal composite oxide. A lower limit of the P content rate is, for example, 0.01 mol%.

An Me content rate of the lithium-transition metal composite oxide satisfies 0 mol% < the Me content rate ≤ 20 mol% relative to the total number of moles of metal elements excluding Li. The Me content rate is preferably within this range from the viewpoint of achievement of both the increase in capacity and stabilization of the structure. A lower limit of the Me content rate is, for example, 1 mol%.

A sum of a Ca content rate and a Sr content rate of the lithium-transition metal composite oxide satisfies 0 mol% < the Ca content rate + the Sr content rate ≤ 2 mol% relative to the total number of moles of metal elements excluding Li. At least one of the group consisting of Ca and Sr at this content rate present with P can improve safety of the lithium-transition metal composite oxide. A lower limit of the sum of the Ca content rate and the Sr content rate is, for example, 0.01 mol%.

The lithium-transition metal composite oxide preferably contains both Ca and Sr. This can remarkably improve the safety of the lithium-transition metal composite oxide.

The lithium-transition metal composite oxide preferably satisfies the Ca content rate > the Sr content rate. This can remarkably improve the safety of the lithium-transition metal composite oxide.

The lithium-transition metal composite oxide is, for example, a composite oxide represented by the general formula $Li_aNi_xMn_yP_zMe_wCa_sSr_tO_{2-b}$, wherein $0.8 \leq a \leq 1.2$, $0.75 \leq x \leq 0.95$, $0 < y \leq 0.20$, $0 < z \leq 0.02$, $0 < w \leq 0.20$, $0 < s+t \leq 0.02$, $0 \leq b \leq 0.05$, $x+y+z+w+s+t = 1$, and Me represents at least one element selected from the group consisting of B, Al, Si, Ti, Fe, Co, Sr, Zr, Nb, Mo, Sn, W, and Bi. A proportion of the metal elements contained in the lithium-transition metal composite oxide may be measured with an inductively coupled plasma atomic emission spectrometer (ICP-AES), for example.

In the lithium-transition metal composite oxide, a ratio of a Co content rate to the Mn content rate satisfies $0 \leq$ the Co content rate / the Mn content rate < 2. An upper limit of the Co content rate / the Mn content rate is, for example, 1.8.

In the lithium-transition metal composite oxide, a ratio m/n of a half-value width "m" of a diffraction peak of a (003) face to a half-value width "n" of a diffraction peak of a (110) face in an X-ray diffraction pattern by X-ray diffraction satisfies $0.75 \leq m/n$. If m/n is less than 0.75, the layered structure is excessively largely strained to embrittle the layered structure. An upper limit of m/n is, for example, 0.85. If m/n is greater than 0.85, the battery capacity may decrease.

The X-ray diffraction pattern is obtained by a powder X-ray diffraction method using a powder X-ray diffraction apparatus (manufactured by Rigaku Corporation, product name "RINT-TTR", radiation source Cu-Kα) under the following conditions.

    Measuring Range: 15-120°
    Scanning Rate: 4°/min
    Analyzing Range: 30-120°
    Background: B-spline
    Profile Function: Split pseudo-Voigt function
    Constraint: Li(3a) + Ni(3a) = 1
    Ni(3a) + Ni(3b) = α (α represents each Ni content proportion)
    ICSD No.: 98-009-4814

A crystallite size "s" of the lithium-transition metal composite oxide preferably satisfies $300 Å \leq s \leq 700 Å$ from the viewpoint of increase in the battery capacity and improvement of output characteristics of the battery. The crystallite size "s" is calculated with Scherrer equation from a half-value width of a diffraction peak of a (104) face of the X-ray diffraction pattern by the above X-ray diffraction. The Scherrer equation is represented by the following equation. In the following equation, "s" represents the crystallite size, "λ" represents a wavelength of the X-ray, B represents the half-value width of the diffraction peak of the (104) face, "θ" represents a diffraction angle (rad), and K represents a Scherrer constant. In the present embodiment, K is 0.9.

$$s = K\lambda/B\cos\theta$$

The lithium-transition metal composite oxide may have a layered structure. Example of the layered structure of the lithium-transition metal composite oxide include a layered structure belonging to the space group R-3m and a layered structure belonging to the space group C2/m. The lithium-transition metal composite oxide preferably has the layered structure belonging to the space group R-3m from the viewpoints of increase in capacity and the stability of the crystal structure. The layered structure of the lithium-transition metal composite oxide may include a transition metal layer and a Li layer.

In the layered structure of the lithium-transition metal composite oxide, a proportion of metal elements other than Li present in the Li layer is less than or equal to 8 mol% relative to a total number of moles of the metal elements excluding Li in the lithium-transition metal composite oxide. If the proportion of the metal elements other than Li in the Li layer is greater than 8 mol%, diffusability of Li ions in the Li layer may deteriorate to decrease the battery capacity. The metal elements other than Li present in the Li layer is mainly Ni, but may include another metal element. The proportion of the metal elements other than Li in the Li layer is, for example, greater than or equal to 0.1 mol%.

The proportion of the metal elements other than Li present in the Li layer of the layered structure is obtained from Rietveld analysis results of the X-ray diffraction pattern by the above X-ray diffraction measurement of the lithium-transition metal composite oxide. For the Rietveld analysis of the X-ray diffraction pattern, PDXL2 (Rigaku Corporation), which is a software for Rietveld analysis, may be used, for example.

The lithium-transition metal composite oxide may include secondary particles each formed by aggregation of primary particles. A particle diameter of the primary particles is, for example, greater than or equal to 0.02 $\mu$m and less than or equal to 2 $\mu$m. The particle diameter of the primary particles is measured as a diameter of a circumscribed circle in a particle image observed with a scanning electron microscope (SEM). An average particle diameter of the secondary particles of the lithium-containing composite oxide is, for example, greater than or equal to 2 $\mu$m and less than or equal to 30 $\mu$m. Here, the average particle diameter means a median diameter (D50) on a volumetric basis. The D50 means a particle diameter at which a cumulative frequency is 50% from a smaller particle diameter side in a particle size distribution on a volumetric basis. The particle size distribution of the secondary particles can be measured by using a laser diffraction-type particle size distribution measuring device (for example, MT3000II, manufactured by MicrotracBEL Corp.) with water as a dispersion medium.

A surface-modifying layer containing at least one of the group consisting of Ca and Sr, and P, is present on surfaces of the primary particles including surfaces of the secondary particles. This can remarkably inhibit side reactions between the primary particles and the non-aqueous electrolyte. The presence of Ca and P in the surface-modifying layer can be confirmed by energy dispersive X-ray spectrometry (TEM-DEX), for example.

For example, the surface-modifying layer may include a compound containing at least one of the group consisting of Ca and Sr and a compound containing P, or may include a compound containing at least one of the group consisting of Ca and Sr, and P. Alternatively, the surface-modifying layer may contain a compound containing at least one of the group consisting of Ca and Sr, a compound containing P, and a compound containing at least one of the group consisting of Ca and Sr, and P. These compounds may be uniformly dispersed on the entire surfaces of the primary particles including the surfaces of the secondary particles of the lithium-transition metal composite oxide, or may be present on a part thereof. These compounds are, for example, oxides.

At least one of the group consisting of Ca and Sr, and P may be present in the surface-modifying layer and within 30 nm near the surfaces of the primary particles. This allows the effect of inhibiting the side reactions to be more remarkable.

The positive electrode mixture layer may include another positive electrode active material in addition to the positive electrode active material of the aforementioned present embodiment. Examples of the other positive electrode active material include a lithium-transition metal composite oxide not containing at least one of the group consisting of Ca and Sr, and P.

Next, an example of the method for manufacturing a positive electrode active material according to the present embodiment will be described. The method for manufacturing a positive electrode active material includes, for example: a step of mixing a metal oxide containing at least Ni, a Li raw material, a P raw material, and at least one of the group consisting of a Ca raw material and a Sr raw material to obtain a mixture; and a step of calcining the mixture to obtain the positive electrode active material.

The metal oxide containing at least Ni may be produced by: separately adding dropwise a solution of metal salts containing Ni, Co, Al, Mn, and the like and a solution of an alkali such as sodium hydroxide into a reaction vessel in which a solution with adjusted pH is stirred for adjusting pH on the alkaline side (for example, greater than or equal to 8.5 and less than or equal to 12.5) to precipitate (coprecipitate) a composite hydroxide; and thermally treating this metal hydroxide. The calcining temperature is not particularly limited, and within a range of greater than or equal to 250°C and less than or equal to 600°C, for example.

Then, the metal oxide containing at least Ni, the Li raw material, the P raw material, and at least one of the group consisting of the Ca raw material and the Sr raw material, are mixed to obtain the mixture. Examples of the Li raw material include $Li_2CO_3$, $LiOH$, $Li_2O_2$, $Li_2O$, $LiNO_3$, $LiNO_2$, $Li_2SO_4$, $LiOH \cdot H_2O$, $LiH$, and $LiF$. Examples of the P raw material include $P_2O_5$, $CaHPO_4$, $Ca(H_2PO_4)_2$, and $Ca_3(PO_4)_2$. Examples of the Ca raw material include $Ca(OH)_2$, $CaHPO_4$, $Ca(H_2PO_4)_2$, $Ca_3(PO_4)_2$, $CaO$, $CaCO_3$, $CaSO_4$, $Ca(NO_3)_2$, $CaCl_2$, and $CaAlO_4$. Examples of the Sr raw material include $Sr(OH)_2$, $SrHPO_4$, $Sr(H_2PO_4)_2$, $Sr_3(PO_4)_2$, $SrO$, $SrCO_3$, $SrSO_4$, $Sr(NO_3)_2$, $SrCl_2$, and $SrAlO_4$. Note that $CaHPO_4$, $Ca(H_2PO_4)_2$, and $Ca_3(PO_4)_2$ are raw materials that can add Ca and P. $SrHPO_4$, $Sr(H_2PO_4)_2$, and $Sr_3(PO_4)_2$ are raw materials that can add Sr and P. In mixing, the Me raw material may be mixed. Examples of the Me raw material include $ZrO_2$, $Nb_2O_5$, $Nb_2O_5 \cdot nH_2O$, $TiO_2$, $Ti(OH)_4$, $SiO$, $SiO_2$, $Li_2MoO_4$, $MoO_3$, $H_2MoO_4$, $WO_3$, $Li_2WO_4$, $Al(OH)_2$, $Al_2O_3$, $Al_2(SO_4)_3$, and $Al(NO_3)_3$.

The above mixture is calcined to obtain the lithium-transition metal composite oxide as the positive electrode active material. For example, the mixture is calcined, in an oxygen flow with an oxygen concentration of greater than or equal to 60% with a flow rate of the oxygen flow of greater than or equal to 0.1 mL/min and less than or equal to 4 mL/min per 10 cm3 of the calcination furnace or greater than or equal to 1 L/min per kilogram of the mixture. In the calcining condition, a first setting temperature is set to less than or equal to 450°C, a holding time at the first set temperature is within a range of greater than or equal to 0 hours and less than or equal to 8 hours, and a heating rate within less than or equal to 450°C is within a range of greater than 1.5°C/min and less than or equal to 6.0°C/min. A second setting temperature is set to greater than or equal to 450°C and less than or equal to 680°C, a holding time at the second set temperature is within a range of greater than or equal to 0 hours and less than or equal to 8 hours, and a heating rate within greater than or equal to 450°C and less than or equal to 680°C is within a range of greater than 1.0°C/min and less than or equal to 4.5°C/min. A highest reaching temperature is within a range of greater than or equal to 690°C and less than or equal to 900°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 10 hours. In addition, this calcining step may be multistage calcining, and a plurality of calcining steps may be set in each temperature region in the range prescribed above. For example, changing the first set temperature, the second set temperature, each of the heating rates to the highest reaching temperature, and each of the holding times can vary crystallinity of the lithium-transition metal composite oxide to regulate the value of the ratio m/n of the half-value widths.

The produced lithium-transition metal composite oxide may be subjected to a water-washing and drying step, and a thermally treating step thereafter. The water-washing and drying step may be performed by a known method under a known condition. Into a cake-like composition after the water washing or during the thermally treating step, the Me raw material may be added. The thermally treating step is performed in, for example, vacuo, an oxygen flow, or air at a temperature of greater than or equal to 150°C and less than or equal to 600°C. Examples of the Me raw material added after the water washing or during the thermally treating step include tungsten oxide ($WO_3$), lithium tungstate ($Li_2WO_4$, $Li_4WO_5$, and $Li_6W_2O_9$), boric acid ($H_3BO_3$), lithium borate ($Li_2B_4O_7$, $Li_3BO_3$, $LiB_3O_5$, and $LiBO_2$), aluminum oxide ($Al_2O_3$), and aluminum sulfate ($Al_2(SO_4)_3$).

[Negative Electrode]

The negative electrode 12 has, for example, a negative electrode current collector and a negative electrode mixture layer formed on a surface of the negative electrode current collector. The negative electrode mixture layer is preferably formed on both surfaces of the negative electrode current collector. For the negative electrode current collector, a foil of a metal stable within a potential range of the negative electrode 12, such as copper and a copper alloy, a film in which such a metal is disposed on a surface layer thereof, and the like may be used. A thickness of the negative electrode current collector is, for example, greater than or equal to 5 $\mu$m and less than or equal to 30 $\mu$m. The negative electrode mixture layer includes, for example, a negative electrode active material and a binder. A thickness of the negative electrode mixture layer is, for example, greater than or equal to 10 $\mu$m and less than or equal to 150 $\mu$m on one side of the negative electrode current collector. The negative electrode 12 may be produced by, for example, applying a negative electrode mixture slurry including the negative electrode active material, the binder, and the like on the surface of the negative electrode current collector, and drying and subsequently rolling the coating film to form the negative electrode mixture layer on both surfaces of the negative electrode current collector.

The negative electrode active material included in the negative electrode mixture layer is not particularly limited as long as it can reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, those in which a carbon coating is provided on these materials may also be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0<y<2$), or the like may be used in combination with the graphite.

Example of the binder included in the negative electrode mixture layer include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or may be used in combination of two or more thereof.

[Separator]

For the separator 13, a porous sheet having an ion permeation property and an insulation property is used, for example. Specific examples of the porous sheet include a fine porous thin film, a woven fabric, and a nonwoven fabric. As a material for the separator, a polyolefin such as polyethylene or polypropylene, cellulose, or the like is preferable. The separator 13 may have a single-layer structure or a multi-layer structure. On a surface of the separator 13, a resin layer having high heat resistance, such as an aramid resin, and a filler layer including a filler of an inorganic compound may be provided.

[Non-Aqueous Electrolyte]

The non-aqueous electrolyte includes, for example, a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), and ethyl propionate (EP).

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (1<x<6, and "n" represents 1 or 2), $LiB_{10}Cl_{10}$, $LiCl$, $LiBr$, $LiI$, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_lF_{2l+1}SO_2)(C_mF_{2m+1}SO_2)$ {"l" and "m" represent integers of greater than or equal to 0}. These lithium salts may be used singly, or a plurality of types thereof may be mixed for use. Among them, $LiPF_6$ is preferably used from the viewpoints of ion conductivity, electrochemical stability, and the like. A concentration of the lithium salt is preferably, for example, greater than or equal to 0.5 mol and less than or equal to 2 mol per litter of the non-aqueous solvent. In addition, vinylene carbonate or a propanesultone-type additive may be added.

EXAMPLES

Hereinafter, the present disclosure will be further described with Examples and Comparative Examples, but the present disclosure is not limited to the following Examples.

<Example 1-1>

[Production of Positive Electrode Active Material]

A composite hydroxide obtained by a coprecipitation method and represented by $[Ni_{0.90}Co_{0.06}Mn_{0.04}](OH)_2$ was calcined at 400°C for 8 hours to obtain a metal oxide ($Ni_{0.90}Co_{0.06}Mn_{0.04}O_2$). Then, the above metal oxide and $CaHPO_4$ were mixed so that each of the mole ratios of Ca and P relative to a total amount of the metal elements was 0.25 mol%, and lithium hydroxide monohydrate ($LiOH \cdot H_2O$) was mixed so that a mole ratio of Li relative to a total amount of Ni, Co, Mn, Ca, and P was 103 mol% to obtain a mixture. This mixture was heated under an oxygen flow with an oxygen concentration of 95% (a flow rate of 3 L/min per kilogram of the mixture) at a heating rate of 4°C/min from room temperature to 400°C, and then heated at a heating rate of 2°C/min from 400°C to 650°C. Thereafter, the mixture was heated at a heating rate of 1°C/min from 650°C to 740°C, and then retained for 6 hours to obtain a lithium-transition metal composite oxide. This lithium-transition metal composite oxide was washed with water and dried to obtain a positive electrode active material of Example 1-1. The presence of a surface-modifying layer containing Ca and P on the surface of the positive electrode active material was confirmed by TEM-EDX.

The obtained positive electrode active material was measured with an ICP atomic emission spectrometer (iCAP6300, manufactured by Thermo Fisher Scientific Inc.) to confirm elements shown in Table 1 described later, as elements excluding Li and O. A ratio m/n of the half-value widths of this positive electrode active material was 0.79. The presence of Ca and P on surfaces of primary particles including surfaces of secondary particles of this positive electrode active material was confirmed by TEM-EDX.

[Production of Positive Electrode]

Mixing 95 parts by mass of the above positive electrode active material, 3 parts by mass of acetylene black (AB), and 2 parts by mass of polyvinylidene fluoride (PVDF) was performed, and an appropriate amount of N-methyl-2-pyrrolidone (NMP) was further added to prepare a positive electrode mixture slurry. Then, the positive electrode mixture slurry was applied on both surfaces of a positive electrode current collector composed of aluminum foil, the coating film was dried, and then the coating film was rolled with a roller, and cut to a predetermined electrode size to produce a positive electrode. At a part of the positive electrode, an exposed portion where the surface of the positive electrode current collector was exposed was provided.

[Production of Negative Electrode]

As a negative electrode active material, natural graphite was used. The negative electrode active material, sodium carboxymethylcellulose (CMC-Na), and styrene-butadiene rubber (SBR) were mixed at a solid-content mass ratio of 100:1:1 in an aqueous solution to prepare a negative electrode mixture slurry. Then, the negative electrode mixture slurry was applied on both surfaces of a negative electrode current collector composed of copper foil, the coating film was dried, then the coating film was rolled with a roller, and cut to a predetermined electrode size to produce a negative electrode. On a part of the negative electrode, an exposed portion where the surface of the negative electrode current collector was exposed was provided.

[Preparation of Non-Aqueous Electrolyte]

Ethylene carbonate (EC), ethyl methyl carbonate (EMC), and dimethyl carbonate (DMC) were mixed at a volume ratio of 3:3:4. Into this mixed solvent, lithium hexafluorophosphate ($LiPF_6$) was dissolved at a concentration of 1.2 mol/L to prepare a non-aqueous electrolyte.

[Production of Test Cell]

A positive electrode lead was attached to the exposed portion of the positive electrode, and a negative electrode lead was attached to the exposed portion of the negative electrode. The positive electrode and the negative electrode were spirally wound via a separator made of a polyolefin, and then press-formed in a radial direction to produce a flat, wound electrode assembly. This electrode assembly was housed in an exterior composed of an aluminum laminate sheet, the non-aqueous electrolyte liquid was injected thereinto, and then an opening of the exterior was sealed to obtain a test cell.

[Evaluation of Heat Generation Speed]

Under an environment temperature of 25°C, the above test cell was charged at a constant current of 0.3 C until 4.2 V, and then charged at a constant voltage of 4.2 V until 0.02 C to prepare a charged state. Thereafter, the above test cell in the charged state was set on a runaway reaction measurement device (accelerated rate calorimeter: ARC, manufactured by Thermal Hazard Technology), and a cell temperature was observed with a thermocouple attached to the test cell to measure a heat generation speed (°C/min) of the test cell. When rise in temperature at greater than or equal to 0.02°C/min was not detected by retaining the test cell for 20 minutes under an environment at a measurement beginning temperature of 80°C, the environment temperature was raised by 5°C and the test cell was retained again for 20 minutes to measure the heat generation speed. The environment temperature was raised by each 5°C as above to perform the measurement until rise in temperature at greater than or equal to 0.02°C/min was detected. A case where the rise in temperature at greater than or equal to 0.02°C/min was detected was judged as beginning of self heat generation, and the heat generation speed after 8 hours from the beginning of the self heat generation was compared.

**EP 4 550 467 A1**

<Example 1-2>

A test cell was produced and evaluated in the same manner as in Example 1-1 except that, in the production of the positive electrode active material, the composition of the metal oxide was changed to $Ni_{0.92}Co_{0.05}Mn_{0.03}O_2$, and the metal oxide and $Ca_3(PO_4)_2$ were mixed so that the mole ratio of Ca relative to the total amount of the metal elements was 0.6 mol% and the mole ratio of P was 0.4 mol%.

<Example 1-3>

A test cell was produced and evaluated in the same manner as in Example 1-1 except that the positive electrode active material was produced as follows.

(1) The composition of the metal oxide was changed to $Ni_{0.92}Co_{0.04}Mn_{0.04}O_2$.
(2) The metal oxide, $CaHPO_4$, $TiO_2$, and $WO_3$ were mixed so that each of the mole ratios of Ca and P relative to the total amount of the metal elements was 0.5 mol%, the mole ratio of Ti was 0.5 mol%, and the mole ratio of W was 0.5 mol% to obtain a mixture.
(3) The oxygen flow rate was changed to 5 L/min per kilogram of the mixture, and this mixture was heated at a heating rate of 4°C/min from room temperature to 300°C, then heated at a heating rate of 3°C/min from 300°C to 550°C, and retained at 550°C for 4 hours. Thereafter, the mixture was heated at a heating rate of 3°C/min from 550°C to 680°C, then heated at a heating rate of 0.8°C/min from 680°C to 750°C, and then retained for 6 hours to obtain a lithium-transition metal composite oxide.

<Example 1-4>

A test cell was produced and evaluated in the same manner as in Example 1-1 except that the positive electrode active material was produced as follows.

(1) The composition of the metal oxide was changed to $Ni_{0.91}Co_{0.01}Mn_{0.06}Al_{0.02}O_2$.
(2) The metal oxide, $CaHPO_4$, $Sr(OH)_2$, and SiO were mixed so that each of the mole ratios of Ca and P relative to the total amount of the metal elements was 1 mol%, the mole ratio of Sr was 0.5 mol%, and the mole ratio of Si was 0.5 mol% to obtain a mixture.
(3) This mixture was heated at a heating rate of 4°C/min from room temperature to 450°C, and retained at 450°C for 4 hours. Thereafter, the mixture was heated at a heating rate of 2°C/min from 400°C to 650°C, and then retained at 650°C for 2 hours. Thereafter, the mixture was heated at a heating rate of 1°C/min from 650°C to 720°C, and then retained for 6 hours to obtain a lithium-transition metal composite oxide.

<Example 1-5>

A test cell was produced and evaluated in the same manner as in Example 1-1 except that, in the production of the positive electrode active material, the composition of the metal oxide was changed to $Ni_{0.90}Co_{0.02}Mn_{0.08}O_2$, and the metal oxide, $CaHPO_4$, $ZrO_2$, $Nb_2O_5$, and $SiO_2$ were mixed so that each of the mole ratios of Ca and P relative to the total amount of the metal elements was 0.5 mol%, the mole ratio of Zr was 0.5 mol%, the mole ratio of Nb was 0.1 mol%, and the mole ratio of Si was 0.4 mol%.

<Example 1-6>

A test cell was produced and evaluated in the same manner as in Example 1-1 except that the positive electrode active material was produced as follows.

(1) In the production of the positive electrode active material, the composition of the metal oxide was changed to $Ni_{0.01}Mn_{0.07}Al_{0.02}O_2$.
(2) The metal oxide, $CaHPO_4$, $Ca(OH)_2$, and $Sr(OH)_2$ were mixed so that the mole ratio of Ca relative to the total amount of the metal elements was 0.6 mol%, the mole ratio of Sr was 0.1 mol%, and the mole ratio of P was 0.3 mol% to obtain a mixture.
(3) The oxygen flow rate was changed to 1 L/min per kilogram of the mixture, and this mixture was heated at a heating rate of 4°C/min from 400°C to 650°C, then retained at 650°C for 2 hours, thereafter heated at a heating rate of 1°C/min from 650°C to 720°C, and then retained for 8 hours to obtain a lithium-transition metal composite oxide.

**11**

<Comparative Example 1-1>

A test cell was produced and evaluated in the same manner as in Example 1-1 except that, in the production of the positive electrode active material: the P raw material was not mixed; and the metal oxide, $Ca(OH)_2$, and $WO_3$ were mixed so that the mole ratio of Ca relative to the total amount of the metal elements was 0.5 mol%, and the mole ratio of W was 0.5 mol%.

<Comparative Example 1-2>

A test cell was produced and evaluated in the same manner as in Example 1-1 except that, in the production of the positive electrode active material: the Ca raw material was not mixed; and the metal oxide, $P_2O_5$, and $Nb_2O_5$ were mixed so that the mole ratio of P relative to the total amount of the metal elements was 2 mol%, and the mole ratio of Nb was 1 mol%.

<Comparative Example 1-3>

A test cell was produced and evaluated in the same manner as in Example 1-1 except that the positive electrode active material was produced as follows.

(1) The composition of the metal oxide was changed to $Ni_{0.92}Co_{0.05}Al_{0.03}O_2$.
(2) The metal oxide and $SrHPO_4$ were mixed so that each of the mole ratios of Sr and P relative to the total amount of the metal elements was 0.25 mol% to obtain a mixture.
(3) This mixture was heated at a heating rate of 4°C/min from room temperature to 400°C, and then heated at a heating rate of 4.5°C/min from 400°C to 650°C. Thereafter, the mixture was heated at a heating rate of 2°C/min from 650°C to 700°C, and then retained for 4 hours to obtain a lithium-transition metal composite oxide.

<Comparative Example 1-4>

A test cell was produced and evaluated in the same manner as in Example 1-1 except that the positive electrode active material was produced as follows.

(1) The metal oxide, $CaHPO_4$, and $Sr(OH)_2$ were mixed so that each of the mole ratios of Ca, Sr, and P relative to the total amount of the metal elements was 1 mol%.
(2) This mixture was heated at a heating rate of 4°C/min from room temperature to 400°C, and then heated at a heating rate of 5°C/min from 400°C to 700°C. Thereafter, the mixture was heated at a heating rate of 4°C/min from 700°C to 740°C, and then retained for 2 hours to obtain a lithium-transition metal composite oxide.

<Example 2-1>

A test cell was produced and evaluated in the same manner as in Example 1-1 except that in the positive electrode active material: the composition of the metal oxide was changed to $Ni_{0.80}Co_{0.10}Mn_{0.10}O_2$; the metal oxide, $Ca(H_2PO_4)_2$, and $SrHPO_4$ were mixed so that the mole ratio of Ca relative to the total amount of the metal elements was 0.5 mol%, the mole ratio of Sr was 0.25 mol%, and the mole ratio of P was 1.25 mol%; and the mixture was heated at a heating rate of 1°C/min from 650°C to 800°C, and then retained for 10 hours.

<Comparative Example 2-1>

A test cell was produced and evaluated in the same manner as in Example 1-1 except that in the positive electrode active material: the composition of the metal oxide was changed to $Ni_{0.80}Co_{0.10}mn_{0.10}O_2$; the metal oxide was used as the positive electrode active material without mixing and calcining with the Ca raw material and the P raw material; and the mixture was heated at a heating rate of 1°C/min from 650°C to 760°C, and then retained for 10 hours.

<Comparative Example 2-2>

A test cell was produced and evaluated in the same manner as in Example 1-1 except that in the positive electrode active material: the composition of the metal oxide was changed to $Ni_{0.83}Co_{0.12}Mn_{0.05}O_2$; the metal oxide and $SrHPO_4$ were mixed so that each of the mole ratios of Sr and P relative to the total amount of the metal elements was 0.75 mol%; and the mixture was heated at a heating rate of 1°C/min from 650°C to 800°C, and then retained for 10 hours.

The evaluation results of the test cells of Examples and Comparative Examples are separately shown in Table 1 and Table 2. Table 1 and Table 2 also show the composition of the positive electrode active material, the sum of the Ca content rate and the Sr content rate, the ratio of the Co content rate to the Mn content rate, the ratio m/n of the half-value widths, the proportion of the metal elements other than Li in the Li layer, and the crystallite size "s". In Table 1, the heat generation speed of the test cells other than Comparative Example 1-1 is shown relative to the heat generation speed of the test cell of Comparative Example 1-1 being ±0. In Table 2, the heat generation speed of the test cells other than Comparative Example 2-1 is shown relative to the heat generation speed of the test cell of Comparative Example 2-1 being ±0.

[Table 1]

| | Composition of positive electrode active material [mol%] | | | | | | Ca+Sr [mol%] | Co/Mn | Ratio of half-value widths m/n | Proportion of metal elements other than Li in Li layer [%] | Crystallite sizes [Å] | Heat generation speed [°C /min] |
|---|---|---|---|---|---|---|---|---|---|---|---|---|
| | Ni | Mn | Me | Ca | Sr | P | | | | | | |
| Example 1-1 | 89.5 | 4 | Co 6 | 0.25 | 0 | 0.25 | 0.25 | 1.5 | 0.79 | 1.8 | 543 | -4 |
| Example 1-2 | 91 | 3 | Co 5 | 0.6 | 0 | 0.4 | 0.6 | 1.7 | 0.76 | 0.9 | 568 | -2 |
| Example 1-3 | 90 | 4 | Co 4<br>Ti 0.5<br>W 0.5 | 0.5 | 0 | 0.5 | 0.5 | 1 | 0.81 | 4.5 | 404 | -6 |
| Example 1-4 | 88 | 6 | Co 1<br>Al 2<br>Si 0.5 | 1 | 0.5 | 1 | 1.5 | 0.17 | 0.83 | 4.6 | 487 | -9 |
| Example 1-5 | 88 | 8 | Co 2<br>Zr 0.35<br>Nb 0.1<br>Si 0.4 | 0.5 | 0 | 0.5 | 0.5 | 0.25 | 0.80 | 4.6 | 417 | -7 |
| Example 1-6 | 90 | 7 | Al 2 | 0.6 | 0.1 | 0.3 | 0.7 | 0 | 0.81 | 6.9 | 382 | -8 |
| Comparative Example 1-1 | 89 | 4 | Co 6<br>W 0.5 | 0.5 | 0 | 0 | 0.5 | 1.5 | 0.76 | 3.9 | 416 | ±0 |
| Comparative Example 1-2 | 87 | 4 | Co 6<br>Nb 1 | 0 | 0 | 2 | 0 | 1.5 | 0.77 | 8.2 | 341 | +5 |
| Comparative Example 1-3 | 91.5 | 0 | Co 5<br>Al 3 | 0 | 0.25 | 0.25 | 0.25 | - | 0.75 | 4.8 | 420 | +9 |
| Comparative Example 1-4 | 87 | 4 | Co 6 | 1 | 1 | 1 | 2 | 1.5 | 0.71 | 1.3 | 718 | +3 |

[Table 2]

| | Composition of positive electrode active material [mol%] | | | | | | Ca+Sr [mol%] | Co/Mn | Ratio of half-value widths m/n | Proportion of metal elements other than Li in Li layer [%] | Crystallite sizes [Å] | Heat generation speed [°C /min] |
|---|---|---|---|---|---|---|---|---|---|---|---|---|
| | Ni | Mn | Me | Ca | Sr | P | | | | | | |
| Example 2-1 | 78 | 10 | Co 10 | 0.5 | 0.25 | 1.25 | 0.75 | 1 | 0.77 | 1.1 | 609 | -3 |
| Comparative Example 2-1 | 80 | 10 | Co 10 | 0 | 0 | 0 | 0 | 1 | 0.76 | 2.4 | 483 | ±0 |
| Comparative Example 2-2 | 81.5 | 5 | Co 12 | 0 | 0.75 | 0.75 | 0.75 | 2.4 | 0.77 | 0.9 | 627 | ±0 |

In Table 1 and Table 2, the test cells of Examples cause lower heat generation speed than that of the test cells of Comparative Examples. Therefore, it is understood that the safety of the secondary battery is improved by including, in a positive electrode active material, the lithium-transition metal composite oxide containing each of Ni, Mn, P, Me, wherein Me represents at least one element selected from the group consisting of B, Al, Si, Ti, Fe, Co, Sr, Zr, Nb, Mo, Sn, W, and Bi, and at least one of the group consisting of Ca and Sr at the predetermined content rate, wherein the ratio $m/n$ of a half-value width "m" of a diffraction peak of a (003) face to a half-value width "n" of a diffraction peak of a (110) face in an X-ray diffraction pattern by X-ray diffraction satisfies $0.75 \le m/n$.

The present disclosure will be further described with the following embodiments.

Constitution 1:

A positive electrode active material for a non-aqueous electrolyte secondary battery, including a lithium-transition metal composite oxide, wherein

the lithium-transition metal composite oxide contains Ni, Mn, P, Me, wherein Me represents at least one element selected from the group consisting of B, Al, Si, Ti, Fe, Co, Sr, Zr, Nb, Mo, Sn, W, and Bi, and at least one of the group consisting of Ca and Sr,
a Ni content rate of the lithium-transition metal composite oxide satisfies 75 mol% ≤ the Ni content rate ≤ 95 mol% relative to a total number of moles of metal elements excluding Li,
a Mn content rate of the lithium-transition metal composite oxide satisfies 0 mol% < the Mn content rate ≤ 20 mol% relative to the total number of moles of metal elements excluding Li,
a P content rate of the lithium-transition metal composite oxide satisfies 0 mol% < the P content rate ≤ 2 mol% relative to the total number of moles of metal elements excluding Li,
**an Me content** rate of the lithium-transition metal composite oxide satisfies 0 mol% < the Me content rate ≤ 20 mol% relative to the total number of moles of metal elements excluding Li,
a sum of a Ca content rate and a Sr content rate of the lithium-transition metal composite oxide satisfies 0 mol% < the Ca content rate + the Sr content rate ≤ 2 mol% relative to the total number of moles of metal elements excluding Li,
a ratio of a Co content rate to the Mn content rate satisfies 0 ≤ the Co content rate / the Mn content rate < 2, and
a ratio $m/n$ of a half-value width "m" of a diffraction peak of a (003) face to a half-value width "n" of a diffraction peak of a (110) face in an X-ray diffraction pattern by X-ray diffraction satisfies $0.75 \le m/n$.

Constitution 2:

The positive electrode active material for a non-aqueous electrolyte secondary battery according to Constitution 1, wherein

the lithium-transition metal composite oxide has a layered structure, and
a proportion of metal elements other than Li present in a Li layer of the layered structure is less than or equal to 8 mol% relative to the total number of moles of metal elements in the lithium-transition metal composite oxide excluding Li.

Constitution 3:

The positive electrode active material for a non-aqueous electrolyte secondary battery according to Constitution 1 or 2, wherein a crystallite size "s" of the lithium-transition metal composite oxide satisfies $300 \text{ Å} \leq s \leq 700 \text{ Å}$, the crystallite size "s" being calculated with Scherrer equation from a half-value width of a diffraction peak of a (104) face of the X-ray diffraction pattern by X-ray diffraction.

Constitution 4:

The positive electrode active material for a non-aqueous electrolyte secondary battery according to any one of Constitutions 1 to 3, wherein

the lithium-transition metal composite oxide includes secondary particles each formed by aggregation of primary particles, and
a surface-modifying layer containing at least one of the group consisting of Ca and Sr, and P, is present on surfaces of the primary particles including surfaces of the secondary particles.

Constitution 5:

The positive electrode active material for a non-aqueous electrolyte secondary battery according to any one of Constitutions 1 to 4, wherein the lithium-transition metal composite oxide contains both Ca and Sr.

Constitution 6:

The positive electrode active material for a non-aqueous electrolyte secondary battery according to any one of Compositions 1 to 5, wherein the Ca content rate > the Sr content rate is satisfied.

Constitution 7:

A method for manufacturing a positive electrode active material for a non-aqueous electrolyte secondary battery, including:

a step of mixing a metal oxide containing at least Ni, a Li raw material, a P raw material, and at least one of the group consisting of a Ca raw material and a Sr raw material to obtain a mixture; and
a step of calcining the mixture.

Constitution 8:

A non-aqueous electrolyte secondary battery, comprising:

a positive electrode including the positive electrode active material for a non-aqueous electrolyte secondary battery according to any one of Constitutions 1 to 6;
a negative electrode; and
a non-aqueous electrolyte.

REFERENCE SIGNS LIST

10 Secondary battery, 11 Positive electrode, 12 Negative electrode, 13 Separator, 14 Electrode assembly, 16 Exterior, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

**Claims**

1. A positive electrode active material for a non-aqueous electrolyte secondary battery, including a lithium-transition metal composite oxide, wherein

the lithium-transition metal composite oxide contains Ni, Mn, P, Me, wherein Me represents at least one element selected from the group consisting of B, Al, Si, Ti, Fe, Co, Sr, Zr, Nb, Mo, Sn, W, and Bi, and at least one of the group consisting of Ca and Sr,

a Ni content rate of the lithium-transition metal composite oxide satisfies 75 mol% $\leq$ the Ni content rate $\leq$ 95 mol% relative to a total number of moles of metal elements excluding Li,

a Mn content rate of the lithium-transition metal composite oxide satisfies 0 mol% < the Mn content rate $\leq$ 20 mol% relative to the total number of moles of metal elements excluding Li,

a P content rate of the lithium-transition metal composite oxide satisfies 0 mol% < the P content rate $\leq$ 2 mol% relative to the total number of moles of metal elements excluding Li,

an Me content rate of the lithium-transition metal composite oxide satisfies 0 mol% < the Me content rate $\leq$ 20 mol% relative to the total number of moles of metal elements excluding Li,

a sum of a Ca content rate and a Sr content rate of the lithium-transition metal composite oxide satisfies 0 mol% < the Ca content rate + the Sr content rate $\leq$ 2 mol% relative to the total number of moles of metal elements excluding Li,

a ratio of a Co content rate to the Mn content rate satisfies 0 $\leq$ the Co content rate / the Mn content rate < 2, and

a ratio m/n of a half-value width "m" of a diffraction peak of a (003) face to a half-value width "n" of a diffraction peak of a (110) face in an X-ray diffraction pattern by X-ray diffraction satisfies 0.75 $\leq$ m/n.

2. The positive electrode active material for a non-aqueous electrolyte secondary battery according to claim 1, wherein

the lithium-transition metal composite oxide has a layered structure, and

a proportion of metal elements other than Li present in a Li layer of the layered structure is less than or equal to 8 mol% relative to the total number of moles of metal elements in the lithium-transition metal composite oxide excluding Li.

3. The positive electrode active material for a non-aqueous electrolyte secondary battery according to claim 1, wherein a crystallite size "s" of the lithium-transition metal composite oxide satisfies 300 Å $\leq$ s $\leq$ 700 Å, the crystallite size "s" being calculated with Scherrer equation from a half-value width of a diffraction peak of a (104) face of the X-ray diffraction pattern by X-ray diffraction.

4. The positive electrode active material for a non-aqueous electrolyte secondary battery according to claim 1, wherein

the lithium-transition metal composite oxide includes secondary particles each formed by aggregation of primary particles, and

a surface-modifying layer containing at least one of the group consisting of Ca and Sr, and P, is present on surfaces of the primary particles including surfaces of the secondary particles.

5. The positive electrode active material for a non-aqueous electrolyte secondary battery according to claim 1, wherein the lithium-transition metal composite oxide contains both Ca and Sr.

6. The positive electrode active material for a non-aqueous electrolyte secondary battery according to claim 1, wherein the Ca content rate > the Sr content rate is satisfied.

7. A method for manufacturing a positive electrode active material for a non-aqueous electrolyte secondary battery, including:

a step of mixing a metal oxide containing at least Ni, a Li raw material, a P raw material, and at least one of the group consisting of a Ca raw material and a Sr raw material to obtain a mixture; and

a step of calcining the mixture.

8. A non-aqueous electrolyte secondary battery, comprising:

a positive electrode including the positive electrode active material for a non-aqueous electrolyte secondary battery according to any one of claims 1 to 6;

a negative electrode; and

a non-aqueous electrolyte.

Figure 1

<div align="center">

**INTERNATIONAL SEARCH REPORT**

</div>

| International application No. |
| --- |
| **PCT/JP2023/022414** |

**A.    CLASSIFICATION OF SUBJECT MATTER**

*H01M 4/525*(2010.01)i; *C01G 53/00*(2006.01)i; *H01M 4/36*(2006.01)i; *H01M 4/505*(2010.01)i
FI:    H01M4/525; C01G53/00 A; H01M4/36 C; H01M4/505

According to International Patent Classification (IPC) or to both national classification and IPC

**B.    FIELDS SEARCHED**

Minimum documentation searched (classification system followed by classification symbols)

H01M4/525; C01G53/00; H01M4/36; H01M4/505

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2012-253009 A (NIPPON CHEM IND CO LTD) 20 December 2012 (2012-12-20) entire text, all drawings | 1-8 |
| A | CN 108987737 A (ZUNYI YUANCHUANG PRODUCTIVITY PROMOTION CENTER CO., LTD.) 11 December 2018 (2018-12-11) entire text, all drawings | 1-8 |
| A | CN 109301197 A (GUIZHOU YONGHEYI ENVIRONMENTAL PROTECTION TECHNOLOGY CO., LTD.) 01 February 2019 (2019-02-01) entire text, all drawings | 1-8 |
| A | JP 2018-206747 A (SEMICONDUCTOR ENERGY LAB CO LTD) 27 December 2018 (2018-12-27) entire text, all drawings | 1-8 |

☐ Further documents are listed in the continuation of Box C.          ☑ See patent family annex.

| | |
| --- | --- |
| *       Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **25 August 2023** | **05 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/022414**

| Patent document cited in search report | | | Publication date (day/month/year) | Patent family member(s) | | | Publication date (day/month/year) |
|---|---|---|---|---|---|---|---|
| JP | 2012-253009 | A | 20 December 2012 | CN all | 102779991 | A | |
| CN | 108987737 | A | 11 December 2018 | (Family: none) | | | |
| CN | 109301197 | A | 01 February 2019 | (Family: none) | | | |
| JP | 2018-206747 | A | 27 December 2018 | US all | 2018/0013130 | A1 | |
| | | | | WO | 2018/007908 | A1 | |
| | | | | CN | 109417170 | A | |
| | | | | KR | 10-2019-0025632 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6749973 B